# EUROPÄISCHE PATENTSCHRIFT

(11) **EP 1 772 607 B1**
(45) Veröffentlichungstag und Bekanntmachung des Hinweises auf die Patenterteilung: **26.11.2014**
(21) Anmeldenummer: 06014113.2
(22) Anmeldetag: 07.07.2006
(51) Int. Cl.: F02B 29/04

(54) **Wärmeübertrager zur Kühlung von Ladeluft**
Heat exchanger for intake air cooling
Echangeur thermique pour le refroidissement de l'air d'alimentation

(30) Priorität: 27.07.2005 DE 102005035017
(43) Veröffentlichungstag der Anmeldung: 11.04.2007
(73) Patentinhaber: Behr GmbH & Co. KG, 70469 Stuttgart (DE)
(72) Erfinder: Burk, Roland, 70469 Stuttgart (DE)
(74) Vertreter: Grauel, Andreas

(56) Entgegenhaltungen:
- EP-A2- 1 195 571
- EP-A2- 1 221 390
- WO-A-83/02481
- DE-A1- 10 254 016
- DE-B1- 2 602 530

## Beschreibung

Die Erfindung betrifft einen Wärmeübertrager gemäß dem Oberbegriff des Anspruches 1.

Zur Leistungssteigerung von Motoren werden Turbolader zur Verdichtung der Luft verwendet. Hierbei erfolgt jedoch eine Erwärmung der Luft, im folgenden als Ladeluft bezeichnet, infolge der Kompression im Turbolader auf Temperaturen von über 150°C. Um eine derartige Lufterwärmung zu vermindern, werden Luftkühler verwendet, die vome im Kühlmodul angeordnet sind und zur Kühlung der Ladeluft dienen. Die Ladeluft strömt dabei durch einen Wärmeübertrager, der von Umgebungsluft durchströmt und damit gekühlt wird. Dadurch ist eine Abkühlung der Ladeluft auf eine Temperatur möglich, die etwa 20-90 K über der Temperatur der Umgebungsluft liegt. Die Kühlung der Ladeluft ermöglicht eine Leistungssteigerung des Motors.

Eine zweistufige Vorrichtung zur Kühlung von Ladeluft sowie ein Verfahren zum Betreiben einer derartigen Vorrichtung ist beispielsweise aus der DE 102 54 016 A1 bekannt, welche eine weitere Leistungssteigerung infolge der verbesserten Ladeluftkühlung ermöglicht. Ein weiteres Beispiel eines solchen Wärmetauschers ist in WO 83/02481 gezeigt.

Derartige Wärmeübertrager zur Kühlung von Ladeluft lassen jedoch noch Wünsche offen.

Bei verbrauchsarmen Kraftfahrzeugen ist als eine Maßnahme zur Reduzierung des Kraftstoffverbrauchs das Abschalten des Motors bei vorübergehendem Stillstand, beispielsweise beim Halten an einer Ampel, bekannt. Dieses vorübergehende Abschalten des Motors wird auch Idle-stop-Betrieb genannt. Zur Klimatisierung eines Kraftfahrzeug-Innenraums mittels einer Klimaanlage ist sowohl bei fahrendem als auch bei stehendem Kraftfahrzeug ein Antrieb des Kompressors erforderlich, der Teil des Kältemittel-Kreislaufs der Klimaanlage ist. Üblicherweise wird der Kompressor vom Kraftfahrzeug-Motor angetrieben. Für einen Idle-stop-Betrieb, d.h. einen kurzfristigen Stopp des Motors, sind Klimaanlagen mit einem Kältespeicher bekannt, welcher die Kühlleistung über eine gewisse Zeit aufrecht erhält. So ist aus der DE 101 56 944 A1 eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist anstelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist.

Es ist Aufgabe der Erfindung, einen Wärmeübertrager zur Kühlung von Ladeluft zu verbessern.

Diese Aufgabe wird gelöst durch einen Wärmeübertrager mit den Merkmalen des Anspruchs 1. Vorteilhafte Ausgestaltungen sind Gegenstand der Unteransprüche.

Erfindungsgemäß ist ein Wärmeübertrager zur Kühlung von Ladeluft vorgesehen, mit mindestens ein in demselben angeordnetes Speichermittel, welches ein Speichermedium enthält. Die Speichermittel, welche eine Überschuss-Kälteleistung aufnehmen und speichern, können diese Kälteleistung während Beschleunigungsphasen des Motors schnell wieder an die den Verdampfer durchströmende Ladeluft abgeben, so dass Leistungsspitzen, die mit erhöhten Ladelufttemperaturen verbunden sind, über einen gewissen Zeitraum hinweg aufgefangen werden können und die Leistung des Motors in genau diesen Leistungsspitzen so zudem gesteigert werden kann.

Beim Speichermedium handelt es sich bevorzugt um ein PCM-Material, das bevorzugt organische Hydrate enthält oder hieraus gebildet ist. Das Speichermedium ist insbesondere bevorzugt durch Trimethylethan mit Wasser und Harnstoff-Zusätzen gebildet.

Die Phasenumwandlungstemperatur des Speichermediums liegt vorzugsweise in einem Bereich von 0°C bis 30°C, insbesondere von 5°C bis 20°C, insbesondere bevorzugt von 10°C bis 15°C.

Die Speichermittel sind vorzugsweise zwischen Rippen angeordnet, welche den Wärmeübergang verbessern.

Bevorzugt sind die Speichermittel durch Rohre oder rohrähnliche Elemente gebildet, welche das Speichermedium enthalten, und welche abwechselnd mit den vom Kältemittel durchströmten Rohren oder rohrähnlichen Elementen angeordnet sind. Dies ermöglicht einen Aufbau, der sich nur unwesentlich vom herkömmlichen Aufbau unterscheidet, so dass die gleichen Anlagen zur Herstellung verwendet werden können bzw. nur unwesentlich abgeändert werden müssen.

Die Speichermittel können altemativ durch Speicherelemente oder Speicherkapseln gebildet sein, die zwischen die Rippen eingeführt und/oder eingepresst sind.

Gemäß einer bevorzugten Ausgestaltung kommunizieren die Speichermittel miteinander und sind daher gemeinsam mit einem Speichermedium befüllbar, besonders bevorzugt in einem einzigen Arbeitsgang.

Im Folgenden wird die Erfindung anhand von Ausführungsbeispielen unter Bezugnahme auf die Zeichnung im Detail erläutert. In der Zeichnung zeigen:
- Fig. 1: einen schematischen stark vereinfachten Schnitt durch einen Wärmeübertrager in Rundrohr-Bauweise gemäß dem ersten Ausführungsbeispiel,
- Fig. 2: einen schematischen stark vereinfachten Schnitt durch einen Wärmeübertrager in Ovalrohr-Bauweise gemäß dem zweiten Ausführungsbeispiel,
- Fig. 3: einen schematischen stark vereinfachten Schnitt durch einen Wärmeübertrager in Flachrohr-Bauweise gemäß dem dritten Ausführungsbeispiel, und
- Fig. 4: einen schematischen stark vereinfachten Schnitt durch einen Wärmeübertrager in Scheiben-Bauweise gemäß dem vierten Ausführungsbeispiel.

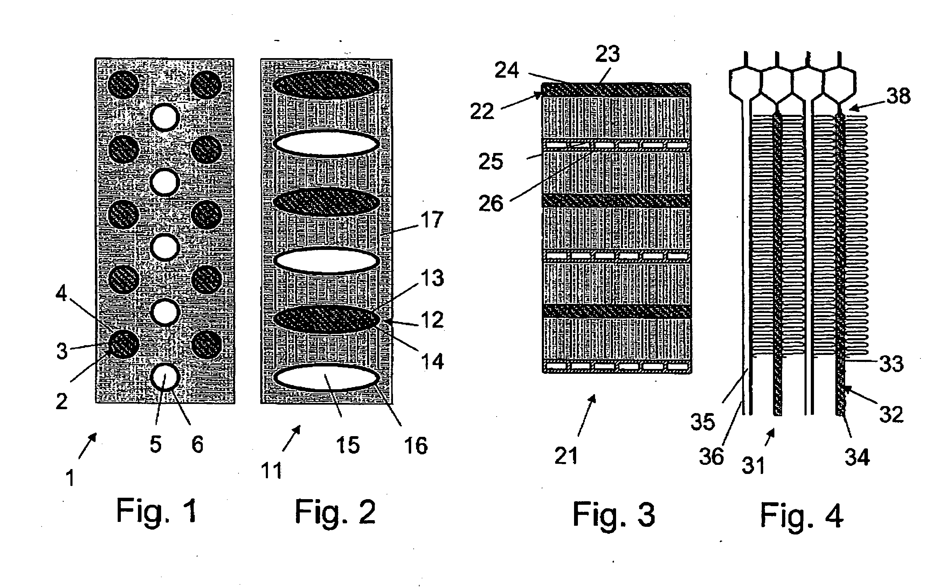

Ein Wärmeübertrager 1 zur Kühlung von Ladeluft, welche einem Kraftfahrzeugmotor zugeführt wird, weist gemäß dem in Fig. 1 dargestellten ersten Ausführungsbeispiel - soweit nachfolgend nicht näher beschrieben - einen im Prinzip bekannten Aufbau in Rundrohr-Bauweise auf, wobei vorliegend eine einstufige Ladeluft-Kühlung vorgesehen ist.

Der Wärmeübertrager 1 ist, wie auch die Wärmeübertrager der an späterer Stelle beschriebenen Ausführungsbeispiele, ein Speicherverdampfer, welcher mindestens ein, vorzugsweise eine Mehrzahl von Speichermitteln 2 aufweist, die ein Speichermedium 3 enthalten, welches Überschuss-Kälteleistung aufnehmen kann, um diese während kurzzeitiger Phasen mit maximalem Motordrehmoment, also insbesondere während Beschleunigungsphasen, schnell wieder an die den Speicherverdampfer durchströmende Ladeluft abzugeben, die in diesen Phasen heißer als in anderen Betriebszuständen ist, und die Ladeluft dadurch zu kühlen. Bei dem Speichermedium 3 handelt es sich um ein PCM-Material (phase change material), welches seine Phasenumwandlungstemperatur in einem Bereich von 0°C und 30°C, vorliegend ca. 15°C aufweist. Als PCM-Material wird gemäß dem ersten Ausführungsbeispiel TME (Trimethylethan) mit Wasser und Harnstoff-Zusätzen verwendet, welches ein Tetrahydrat bildet, dessen Phasenumwandlungstemperatur durch die Harnstoff-Zusätze im Bereich zwischen 13°C und 30°C eingestellt werden kann, wobei die Phasenumwandlungstemperatur vorliegend auf ca. 15°C eingestellt ist.

Das Speichermedium 3 ist in als Behälter dienenden Rundrohren 4 aufgenommen, welche in den Wärmeübertrager 1 integriert sind, wobei sie abwechselnd zu von mit Kältemittel 5 durchströmten Rundrohren 6 angeordnet sind. Dabei sind vorliegend alle Rundrohre 4 miteinander verbunden, wodurch das Befüllen mit dem Speichermedium 3 vereinfacht wird. Alternativ können beispielsweise auch eine Mehrzahl getrennt ausgebildeter Rundrohre 4 vorgesehen sein. Zwischen den Rundrohren 4 und 6 sind Rippen in Form von parallel zur Zeichenebene liegenden Rippenblechen angeordnet. Der vorliegende Aufbau des Wärmeübertragers 1 unterscheidet sich abgesehen von den das Speichermedium 3 enthaltenden Rundrohren 4, welche von Kältemittel 5 durchströmte Rundrohre 6 ersetzen, und den entsprechend geänderten Rohrverbindungen nicht vom Aufbau eines herkömmlichen Wärmeübertragers in Rundrohrbauweise.

Der Wärmeübertrager 11 gemäß dem zweiten Ausführungsbeispiel weist an Stelle von Rundrohren 4 und 6 Ovalrohre 14, die ein Speichermedium 13 enthalten und gemeinsam mit dem Speichermedium 13 Speichermittel 12 bilden, und Ovalrohre 16, die von Kältemittel 15 durchströmt werden, auf, wobei zwischen den abwechselnd angeordneten Ovalrohren 14 und 16 (vgl. Fig. 2) Rippen 17 angeordnet sind, die sich analog zur Rundrohrbauweise parallel zur Zeichenebene erstrecken, in diesem Falle aber noch zusätzliche Kiemen aufweisen, die den Iuftseitigen Wärmeübergang erhöhen. Beim Speichermedium 13 handelt es sich um ein PCM-Material, das eine Phasenübergangstemperatur von 10°C aufweist. Der prinzipielle Aufbau des Wärmeübertragers 11 entspricht wiederum dem Aufbau eines herkömmlichen Wärmeübertragers mit Ovalrohren, wobei ein Teil der Ovalrohre nicht von Kältemittel durchströmt sind, sondern auf Grund ihrer Füllung mit dem Speichermedium 13 als Speichermittel 12 dienen. Auf Grund ihrer unterschiedlichen Füllung und Funktion ist die Verbindung der einzelnen Ovalrohre entsprechend angepasst oder die das Speichermedium enthaltenden Rohre sind einzeln gefüllt und beidseitig verschlossen.

Im Falle des dritten Ausführungsbeispiels, das in Fig. 3 dargestellt ist, entspricht der Aufbau etwa dem des zweiten Ausführungsbeispiels, jedoch sind an Stelle von Ovalrohren 14 und 16 Flachrohre 24, die ein Speichermedium 23 enthalten und gemeinsam mit dem Speichermedium 23 Speichermittel 22 bilden, und Flachrohre 26, die von Kältemittel 25 durchströmt werden, vorgesehen. Der prinzipielle Aufbau des Wärmeübertragers 21 entspricht wieder- um dem Aufbau eines herkömmlichen Wärmeübertragers mit Flachrohren, wobei ein Teil der Flachrohre nicht von Kältemittel durchströmt sind, sondern auf Grund ihrer Füllung mit dem Speichermedium 23 als Speichermittel 22 dienen. Auf Grund ihrer unterschiedlichen Füllung und Funktion ist die Verbindung der einzelnen Flachrohre entsprechend angepasst.

Fig. 4 zeigt das vierte Ausführungsbeispiel, gemäß dem an Stelle von Rohren Scheiben 34, die ein Speichermedium 33 enthalten, und Scheiben, 36, die von Kältemittel 35 durchströmt sind, mit entsprechender Funktion vorgesehen sind. In Folge der Funktionsgleichheit mit den zuvor beschriebenen Rohren, wird auf die Scheiben vorliegend auch als rohrähnliche Elemente Bezug genommen. Auch in diesem Fall entspricht der prinzipielle Aufbau des Wärmeübertragers 31 dem Aufbau eines herkömmlichen Wärmeübertragers in Scheiben-Bauweise, wobei ein Teil der Scheiben nicht von Kältemittel durchströmt sind, sondern auf Grund ihrer Füllung mit dem Speichermedium 33 als Speichermittel 32 dienen. Auf Grund ihrer unterschiedlichen Füllung und Funktion ist die Verbindung der einzelnen Scheiben entsprechend angepasst, wobei vorliegend im Bereich 38 der Enden diejenigen Bleche, welche die Scheiben 34 bilden, zusammengepresst sind, so dass die Scheiben 34 einen geschlossenen Behälter bilden (vgl. Fig. 4 oberer Teil).

Alternativ zum Vorsehen von Rohren können auch anders gestaltete Speicherelemente oder Speicherkapseln vorgesehen sein, die insbesondere an der Luftaustrittsseite, also motorseitig, angeordnet sind. Die Speicherelemente können insbesondere zylindrisch, quaderförmig, kegelförmig, fassförmig oder pyramidenförmig sein. Die Anordnung kann gleichmäßig verteilt oder gruppiert vorgesehen sein, wobei eine gruppierte Anordnung das Befüllen erleichtert.

Gemäß einer besonders einfach herzustellenden Ausführungsform werden die Speicherelemente oder -kapseln in die Rippen eingesteckt, wobei die Rippen entweder entsprechend leicht elastisch und/oder plastisch verformbar sind, so dass sie einfach eingedrückt werden können, oder ein entsprechendes Werkzeug ermöglicht eine entsprechende plastische Verformung der Rippen, so dass die Speicherelemente oder -kapseln einfach eingebaut werden können. Dabei enthalten die Speicherelemente oder -kapseln ein Speichermedium, welches Überschuss-Kälteleistung aufnehmen kann, um diese während kurzzeitiger Phasen mit maximalem Motordrehmoment, also insbesondere während Beschleunigungsphasen, schnell wieder an die den Speicherverdampfer durchströmende Ladeluft abzugeben, die in diesen Phasen heißer als in anderen Betriebszuständen ist, und die Ladeluft dadurch zu kühlen. Bei dem Speichermedium handelt es sich um ein PCM-Material.

## Patentansprüche

1. Wärmeübertrager zur Kühlung von Ladeluft, **dadurch gekennzeichnet, dass** der Wärmeübertrager (1) mindestens ein in denselben angeordnetes Speichermittel (2) aufweist, welches ein Speichermedium (3) enthält und der Wärmeübertrager als Speicherverdampfer ausgebildet ist.

2. Wärmeübertrager nach Anspruch 1, **dadurch gekennzeichnet, dass** das Speichermedium (3) durch ein PCM-Material gebildet ist.

3. Wärmeübertrager nach Anspruch 1 oder 2, **dadurch gekennzeichnet, dass** das Speichermedium (3) durch organische Hydrate gebildet ist.

4. Wärmeübertrager nach Anspruch 3, **dadurch gekennzeichnet, dass** das Speichermedium (3) durch Trimethylethan mit Wasser und Harnstoff-Zusätzen gebildet ist.

5. Wärmeübertrager nach einem der vorhergehenden Ansprüchen, **dadurch gekennzeichnet, dass** die Phasenumwandlungstemperatur des Speichermediums (3) in einem Bereich von 0°C bis 30°C, insbesondere von 5°C bis 20°C, insbesondere bevorzugt von 10°C bis 15°C, liegt.

6. Wärmeübertrager nach einem der vorhergehenden Ansprüchen, **dadurch gekennzeichnet, dass** zwischen den Speichermitteln (2; 12) Rippen (17) angeordnet sind.

7. Wärmeübertrager nach einem der vorhergehenden Ansprüchen, **dadurch gekennzeichnet, dass** die Speichermittel (2; 12) durch Rohre (6; 16; 26) oder rohrähnliche Elemente (36) gebildet sind, welche das Speichermedium (3; 13; 23; 33) enthalten, und welche abwechselnd mit den vom Kältemittel (5; 15; 25; 35) durchströmten Rohren (6; 16; 26) oder rohrähnlichen Elementen (36) angeordnet sind.

8. Wärmeübertrager nach einem der vorhergehenden Ansprüchen, **dadurch gekennzeichnet, dass** die Speichermittel durch Speicherelemente oder Speicherkapseln gebildet sind, die in die zwischen die Rippen eingeführt und/oder eingepresst sind.

9. Wärmeübertrager nach einem der vorhergehenden Ansprüchen, **dadurch gekennzeichnet, dass** die Speichermittel miteinander kommunizieren.

## Claims

1. A heat exchanger for cooling charge air, **characterized in that** the heat exchanger (1) comprises at least one storage means (2) disposed therein, said storage means containing an accumulator medium (3), and the heat exchanger is designed as an accumulator evaporator.

2. The heat exchanger according to claim 1, **characterized in that** the accumulator medium (3) is formed by a PCM material.

3. The heat exchanger according to claim 1 or 2, **characterized in that** the accumulator medium (3) is formed by organic hydrates.

4. The heat exchanger according to claim 3, **characterized in that** the accumulator medium (3) is formed by trimethylethane with water and urea additives.

5. The heat exchanger according to any one of the preceding claims, **characterized in that** the phase-transition temperature of the accumulator medium (3) lies in a range of 0°C to 30°C, in particular 5°C to 20°C, and particularly preferably 10°C to 15°C.

6. The heat exchanger according to any one of the preceding claims, **characterized in that** fins (17) are disposed between the storage means (2; 12).

7. The heat exchanger according to any one of the preceding claims, **characterized in that** the storage means (2; 12) are formed by tubes (6; 16; 26) or tube-like elements (36), which contain the accumulator medium (3; 13; 23; 33), and which are disposed in alternation with the tubes (6; 16; 26) or tube-like elements (36) through which the coolant (5; 15; 25; 35) flows.

8. The heat exchanger according to any one of the preceding claims, **characterized in that** the storage means are formed by storage elements or storage capsules, which are inserted and/or pressed into place between the fins.

9. The heat exchanger according to any one of the preceding claims, **characterized in that** the storage means communicate with one another.

## Revendications

1. Echangeur de chaleur servant au refroidissement d'air de suralimentation, **caractérisé en ce que** l'échangeur de chaleur (1) présente au moins un moyen (2) formant un accumulateur disposé dans ce même échangeur de chaleur, moyen formant un accumulateur qui contient un milieu (3) de l'accumulateur, et l'échangeur de chaleur est conçu comme un évaporateur accumulateur.

2. Echangeur de chaleur selon la revendication 1, **caractérisé en ce que** le milieu (3) contenu dans l'accumulateur est formé par un matériau - PCM - à changement de phase.

3. Echangeur de chaleur selon la revendication 1 ou 2, **caractérisé en ce que** le milieu (3) contenu dans l'accumulateur est formé par des hydrates organiques.

4. Echangeur de chaleur selon la revendication 3, **caractérisé en ce que** le milieu (3) contenu dans l'accumulateur est formé par du triméthyléthane avec de l'eau et des additifs à base d'urée.

5. Echangeur de chaleur selon l'une quelconque des revendications précédentes, **caractérisé en ce que** la température de transition de phase du milieu (3) contenu dans l'accumulateur se situe dans une plage allant de 0°C à 30°C, en particulier de 5°C à 20°C, en particulier de préférence de 10°C à 15°C.

6. Echangeur de chaleur selon l'une quelconque des revendications précédentes, **caractérisé en ce que** des ailettes (17) sont disposées entre les moyens (2 ; 12) formant des accumulateurs.

7. Echangeur de chaleur selon l'une quelconque des revendications précédentes, **caractérisé en ce que** les moyens (2 ; 12) formant des accumulateurs sont formés par des tubes (6 ; 16 ; 26) ou par des éléments (36) semblables à des tubes qui contiennent le milieu (3 ; 13 ; 23 ; 33) de l'accumulateur et qui sont disposés, en alternance, avec les tubes (6 ; 16 ; 26) ou les éléments (36) semblables à des tubes, traversés par le fluide frigorigène (5 ; 15 ; 25 ; 35).

8. Echangeur de chaleur selon l'une quelconque des revendications précédentes, **caractérisé en ce que** les moyens formant des accumulateurs sont formés par des éléments d'accumulateurs ou des capsules d'accumulateurs qui sont introduit(e)s et / ou enfoncé(e)s entre les ailettes.

9. Echangeur de chaleur selon l'une quelconque des revendications précédentes, **caractérisé en ce que** les moyens formant des accumulateurs communiquent entre eux.
